(19) Europäisches Patentamt
European Patent Office
Office européen des brevets

(11) EP 1 569 518 B1

(12) **EUROPEAN PATENT SPECIFICATION**

(45) Date of publication and mention of the grant of the patent:
**11.06.2008 Bulletin 2008/24**

(21) Application number: **03812880.7**

(22) Date of filing: **05.12.2003**

(51) Int Cl.:
***A01N 47/22*** *(2006.01)*

(86) International application number:
**PCT/US2003/039036**

(87) International publication number:
**WO 2004/052102 (24.06.2004 Gazette 2004/26)**

(54) **SYNERGISTIC COMPOSITIONS**

SYNERGISTISCHE ZUSAMMENSETZUNGEN

COMPOSITIONS SYNERGIQUES

(84) Designated Contracting States:
**AT BE BG CH CY CZ DE DK EE ES FI FR GB GR HU IE IT LI LU MC NL PT RO SE SI SK TR**

(30) Priority:
**06.12.2002 US 431397 P**
**30.01.2003 US 443747 P**
**05.03.2003 US 452205 P**
**20.03.2003 US 456296 P**
**21.04.2003 US 464230 P**
**29.05.2003 US 474004 P**

(43) Date of publication of application:
**07.09.2005 Bulletin 2005/36**

(73) Proprietor: **Dow AgroSciences LLC**
**Indianapolis,**
**Indiana 46268-1054 (US)**

(72) Inventors:
- **OWEN, William, John**
  **Carmel, IN 46033 (US)**
- **HUANG, Zhengyu**
  **Carmel, IN 46033 (US)**

(74) Representative: **Dey, Michael et al**
**Weickmann & Weickmann**
**Patentanwälte**
**Postfach 86 08 20**
**81635 München (DE)**

(56) References cited:
**WO-A-00/30440**
**WO-A-00/42011**
**WO-A-02/40431**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 569 518 B1

## Description

FIELD OF THE INVENTION

This invention is related to synergistic compositions comprising fungicidal compounds.

BACKGROUND OF THE INVENTION

Our history is riddled with outbreaks of fungal diseases that have caused widespread human suffering. One need look no further than the Irish potato famine, which occurred from 1845 to 1860, where an estimated 1,000,000 people died, and an estimated 1,500,000 people emigrated, to see the effects of a fungal disease.

Fungicides are compounds, of natural or synthetic origin, which act to protect plants against damage caused by fungi. Current methods of agriculture rely heavily on the use of fungicides. In fact, some crops cannot be grown usefully without the use of fungicides. Using fungicides allows a grower to increase the yield and the quality of the crop and consequently, increase the value of the crop. In most situations, the increase in value of the crop is worth at least three times the cost of the use of the fungicide.

However, no one fungicide is useful in all situations and repeated usage of a single fungicide frequently leads to the development of resistance to that and related fungicides. Consequently, research is being conducted to produce fungicides and combinations of fungicides that are safer, that have better performance, that require lower dosages, that are easier to use, and that cost less.

Synergism occurs when the activity of two, or more, compounds exceeds the activities of the compounds when used alone.

SUMMARY OF THE INVENTION

It is an object of this invention to provide synergistic compositions comprising fungicidal compounds.

It is a further object of this invention to provide processes that use these synergistic compositions.

The synergistic compositions are capable of preventing or curing, or both, diseases caused by fungi of the class *Oomycetes.* In addition, the synergistic compositions have improved efficacy against the Oomycete pathogens, including downy mildew in grapes and other crops and/or late blight in tomatoes and potatoes.

In accordance with this invention, synergistic compositions are provided along with methods for their use.

DETAILED DESCRIPTION OF THE INVENTION

The synergistic compositions of this invention comprise a first composition i) that can be represented by the formula: (see WO 02/40431 and WO 00/42011)

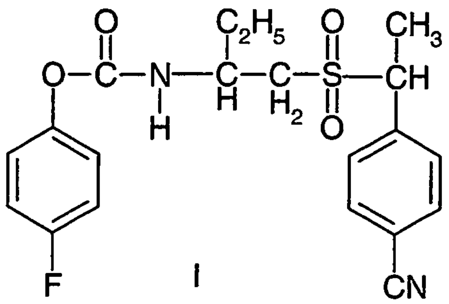

I

and a second composition ii) selected from a), b), c), d) and e) as described hereafter, (see e.g. WO 00/30440).

In one embodiment, the second composition ii) comprises a), wherein a) is a composition of the formula

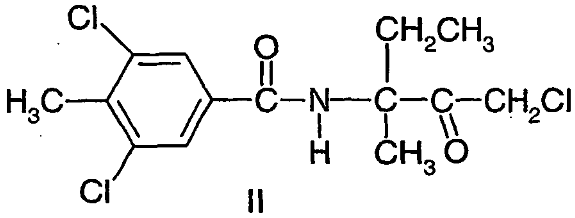

II

The composition of formula II has one chiral center and exists as a mixture of stereoisomers. It is commercially available as zoxamide from Dow AgroSciences LLC.

In another embodiment, the second composition ii) comprises a compound selected from b) chlorothalonil, copper hydroxide, copper oxychloride, folpet, captan, fluazinam, cyazofamid, ethaboxam, cymoxanil, dimethomorph, iprovalicarb, benthivalicarb, fosetyl-Al/phosphonic acid, propamocarb, epimeric and diastereoisomeric forms of a class of dipeptide fungicides cited in US patent 6,448,228 B1, incorporated herein by reference, published 9/10/02 (exemplified by methyl (±)RS-[3-(N-isopropoxycarbonyl-S-valinyl)amino]-3-(4-chlorophenyl)propanoate (Compound 1 in the examples herein) and methyl (±)R-[3-(N-isopropoxycarbonyl-S-valinyl)amino]-3-(4-chlorophenyl) propanoate), and a class of N-sulfonylvaline amides represented by

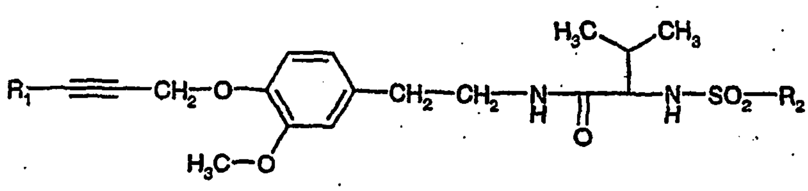

wherein R1 is 4-Cl-C6H5 and R2 is CH3 (compound no: 1.14 in Patent WO 02/21918 published 3/21/02 (Compound 2 in the examples herein); or combinations thereof. These compounds are either commercially available or well known in the art, as well as methods for their manufacture.

In another embodiment, the second composition ii) is c) a mitochondrial Qo-site inhibitor. Qo-site inhibitors contain the strobilurin, dihydroimidazolone, and oxazolidinedione fungicide classes. Specific examples of such inhibitors are azoxystrobin, picoxystrobin, trifloxystrobin, pyraclostrobin, kresoxim-methyl, metominostrobin, fluoxastrobin, enestroburin, fenamidone and famoxadone, or combination thereof, all of which are commercially available.

In another embodiment, the second composition ii) is d) an acylalanine such as furalaxyl, metalaxyl, mefenoxam (also known as metalaxyl-M) benalaxyl, ofurace and oxadixyl, all of which are commercially available,

In yet another specific embodiment, the second composition is e)
an alkylenebis(dithiocarbamate) such as mancopper, mancozeb, maneb, metiram, nabam, propineb, and zineb, all of which are commercially available.

The composition of formula I has two chiral centers and exists as a mixture of stereoisomers. Of particular interest is the composition represented by formula III that is a mixture of stereoisomers of formulas IIIa and IIIb.

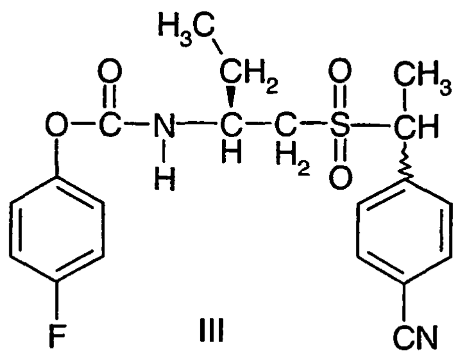

III

The composition according to formula III is also known as 4-fluorophenyl (1S)-1-({[(1R,S)-(4-cyanophenyl)ethyl] sulfonyl}methyl)-propylcarbamate.

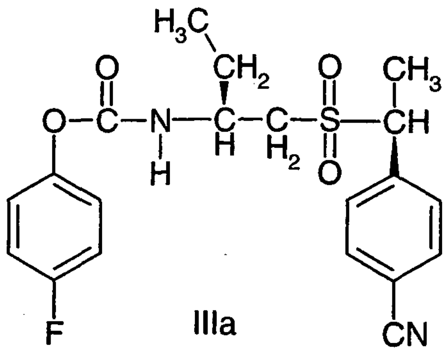

IIIa

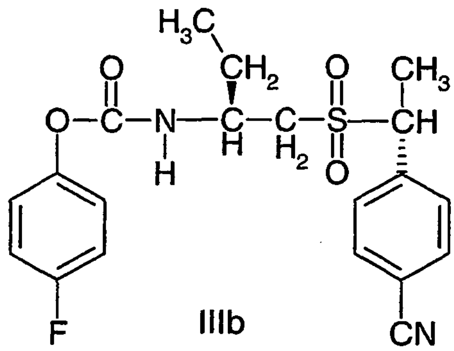

IIIb

The compound according to formula IIIa is also known as 4-fluorophenyl (1S)-1-({[(1S)-1-(4-cyanophenyl)ethyl] sulfonyl}methyl) propylcarbamate.

The ratio by weight in the synergistic compositions of the first composition i) of a composition according to formula III, or a compound according to formula IIIa, to the second composition ii) is from about 0.1 to about 10 and preferably from about 0.2 to about 5.

In one specific embodiment of the present invention, the synergistic composition comprises

i) a composition represented by formula I,

ii) a composition that can be represented by formula II, and

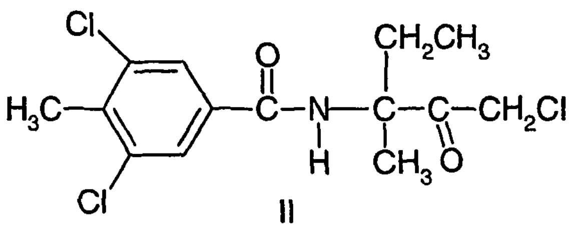

II

iii) a third component selected from commercial fungicidal compounds or compositions, exemplified by mancozeb, cymoxanil, dimethomorph, copper oxychloride, fosetyl-Al, folpet, or mefenoxam, all of which are commercially available.

The weight ratios of each component are exemplified in the following table.

| | Weight Ratio of Actives in Synergistic Composition (where all three together add up to 100) |
|---|---|
| i) | about 1 to about 98 |
| ii) | about 1 to about 98 |
| iii) | about 1 to about 98 |

The compositions of the present invention are preferably applied in the form of a formulation comprising a composition of i), ii) and optionally iii) together with a phytologically acceptable carrier.

Concentrated formulations can be dispersed in water, or another liquid, for application, or formulations can be dust-like or granular, which can then be applied without further treatment. The formulations are prepared according to procedures which are conventional in the agricultural chemical art, but which are novel and important because of the

presence therein of a synergistic composition.

The formulations that are applied most often are aqueous suspensions or emulsions. Either such water-soluble, water suspendable, or emulsifiable formulations are solids, usually known as wettable powders, or liquids, usually known as emulsifiable concentrates, aqueous suspensions, or suspension concentrates. The present invention contemplates all vehicles by which the synergistic compositions can be formulated for delivery and use as a fungicide.

As will be readily appreciated, any material to which these synergistic compositions can be added may be used, provided they yield the desired utility without significant interference with the activity of these synergistic compositions as antifungal agents.

Wettable powders, which may be compacted to form water dispersible granules, comprise an intimate mixture of the synergistic composition, a carrier and agriculturally acceptable surfactants. The concentration of the synergistic composition in the wettable powder is usually from about 10% to about 90% by weight, more preferably about 25% to about 75% by weight, based on the total weight of the formulation. In the preparation of wettable powder formulations, the synergistic composition can be compounded with any of the finely divided solids, such as prophyllite, talc, chalk, gypsum, Fuller's earth, bentonite, attapulgite, starch, casein, gluten, montmorillonite clays, diatomaceous earths, purified silicates or the like. In such operations, the finely divided carrier is ground or mixed with the synergistic composition in a volatile organic solvent. Effective surfactants, comprising from about 0.5% to about 10% by weight of the wettable powder, include sulfonated lignins, naphthalenesulfonates, alkylbenzenesulfonates, alkyl sulfates, and nonionic surfactants, such as ethylene oxide adducts of alkyl phenols.

Emulsifiable concentrates of the synergistic composition comprise a convenient concentration, such as from about 10% to about 50% by weight, in a suitable liquid, based on the total weight of the emulsifiable concentrate formulation. The components of the synergistic compositions, jointly or separately, are dissolved in an carrier, which is either a water miscible solvent or a mixture of water-immiscible organic solvents, and emulsifiers. The concentrates may be diluted with water and oil to form spray mixtures in the form of oil-in-water emulsions. Useful organic solvents include aromatics, especially the high-boiling naphthalenic and olefinic portions of petroleum such as heavy aromatic naphtha. Other organic solvents may also be used, such as, for example, terpenic solvents, including rosin derivatives, aliphatic ketones, such as cyclohexanone, and complex alcohols, such as 2-ethoxyethanol.

Emulsifiers which can be advantageously employed herein can be readily determined by those skilled in the art and include various nonionic, anionic, cationic and amphoteric emulsifiers, or a blend of two or more emulsifiers. Examples of nonionic emulsifiers useful in preparing the emulsifiable concentrates include the polyalkylene glycol ethers and condensation products of alkyl and aryl phenols, aliphatic alcohols, aliphatic amines or fatty acids with ethylene oxide, propylene oxides such as the ethoxylated alkyl phenols and carboxylic esters solubilized with the polyol or polyoxyalkylene. Cationic emulsifiers include quaternary ammonium compounds and fatty amine salts. Anionic emulsifiers include the oil-soluble salts (e.g., calcium) of alkylaryl sulphonic acids, oil soluble salts or sulphated polyglycol ethers and appropriate salts of phosphated polyglycol ether.

Representative organic liquids which can be employed in preparing the emulsifiable concentrates of the present invention are the aromatic liquids such as xylene, propyl benzene fractions; or mixed naphthalene fractions, mineral oils, substituted aromatic organic liquids such as dioctyl phthalate; kerosene; dialkyl amides of various fatty acids, particularly the dimethyl amides of fatty glycols and glycol derivatives such as the n-butyl ether, ethyl ether or methyl ether of diethylene glycol, and the methyl ether of triethylene glycol. Mixtures of two or more organic liquids are also often suitably employed in the preparation of the emulsifiable concentrate. The preferred organic liquids are xylene, and propyl benzene fractions, with xylene being most preferred. The surface-active dispersing agents are usually employed in liquid formulations and in the amount of from 0.1 to 20 percent by weight of the combined weight of the dispersing agent with the synergistic compositions. The formulations can also contain other compatible additives, for example, plant growth regulators and other biologically active compounds used in agriculture.

Aqueous suspensions comprise suspensions of one or more water-insoluble compounds, dispersed in an aqueous vehicle at a concentration in the range from about 5% to about 50% by weight, based on the total weight of the aqueous suspension formulation. Suspensions are prepared by finely grinding the components of the synergistic combination either together or separately, and vigorously mixing the ground material into a vehicle comprised of water and surfactants chosen from the same types discussed above. Other ingredients, such as inorganic salts and synthetic or natural gums, may also be added to increase the density and viscosity of the aqueous vehicle. It is often most effective to grind and mix at the same time by preparing the aqueous mixture and homogenizing it in an implement such as a sand mill, ball mill, or piston-type homogenizer.

The synergistic composition may also be applied as granular formulation, which is particularly useful for applications to the soil. Granular formulations usually contain from about 0.5% to about 10% by weight of the compounds, based on the total weight of the granular formulation, dispersed in an carrier which consists entirely or in large part of coarsely divided attapulgite, bentonite, diatomite, clay or a similar inexpensive substance. Such formulations are usually prepared by dissolving the synergistic composition in a suitable solvent and applying it to a granular carrier which has been preformed to the appropriate particle size, in the range of from about 0.5 to about 3 mm. Such formulations may

also be prepared by making a dough or paste of the carrier and the synergistic composition, and crushing and drying to obtain the desired granular particle.

Dusts containing the synergistic composition are prepared simply by intimately mixing the synergistic composition in powdered form with a suitable dusty agricultural carrier, such as, for example, kaolin clay, ground volcanic rock, and the like. Dusts can suitably contain from about 1% to about 10% by weight of the synergistic composition/carrier combination.

The formulations may contain agriculturally acceptable adjuvant surfactants to enhance deposition, wetting and penetration of the synergistic composition onto the target crop and organism. These adjuvant surfactants may optionally be employed as a component of the formulation or as a tank mix. The amount of adjuvant surfactant will vary from 0.01 percent to 1.0 percent v/v based on a spray-volume of water, preferably 0.05 to 0.5 percent. Suitable adjuvant surfactants include ethoxylated nonyl phenols, ethoxylated synthetic or natural alcohols, salts of the esters or sulphosuccinic acids, ethoxylated organosilicones, ethoxylated fatty amines and blends of surfactants with mineral or vegetable oils.

The formulations may optionally include combinations that can comprise at least 1 % by weight of one or more of the synergistic compositions with another pesticidal compound. Such additional pesticidal compounds may be fungicides, insecticides, nematocides, miticides, arthropodicides, bactericides or combinations thereof that are compatible with the synergistic compositions of the present invention in the medium selected for application, and not antagonistic to the activity of the present compounds. Accordingly, in such embodiments the other pesticidal compound is employed as a supplemental toxicant for the same or for a different pesticidal use. The pesticidal compound and the synergistic composition can generally be mixed together in a weight ratio of from 1:100 to 100:1

The present invention includes within its scope methods for the control or prevention of fungal attack. These methods comprise applying to the locus of the fungus, or to a locus in which the infestation is to be prevented (for example applying to potato or grape plants), a fungicidally effective amount of the synergistic composition. The synergistic composition is suitable for treatment of various plants at fungicidal levels, while exhibiting low phytotoxicity. The synergistic composition is useful in a protectant or eradicant fashion. The synergistic composition is applied by any of a variety of known techniques, either as the synergistic composition or as a formulation comprising the synergistic composition. For example, the synergistic compositions may be applied to the roots, seeds or foliage of plants for the control of various fungi, without damaging the commercial value of the plants. The synergistic composition is applied in the form of any of the generally used formulation types, for example, as solutions, dusts, wettable powders, flowable concentrates, or emulsifiable concentrates. These materials are conveniently applied in various known fashions.

The synergistic composition has been found to have significant fungicidal effect particularly for agricultural use. The synergistic composition is particularly effective for use with agricultural crops and horticultural plants, or with wood, paint, leather or carpet backing.

In particular, the synergistic composition is effective in controlling a variety of undesirable fungi that infect useful plant crops. The synergistic composition can be used against a variety of Oomycete fungi, including for example the following representative fungi species: Downy Mildew of Grape (*Plasmopara viticola* - PLASVI) and Cucurbits (*Pseudoperonospora cubensis*- PSEUCU); Late Blight of Tomato and Potato (*Phytophthora infestans* - PHYTIN). It will be understood by those in the art that the efficacy of the synergistic compositions for one or more of the foregoing fungi establishes the general utility of the synergistic compositions as fungicides.

The synergistic compositions has a broad range of efficacy as a fungicide. The exact amount of the synergistic composition to be applied is dependent not only on the relative amounts of the components, but also on the particular action desired, the fungal species to be controlled, and the stage of growth thereof, as well as the part of the plant or other product to be contacted with the synergistic composition. Thus, formulations containing the synergistic composition may not be equally effective at similar concentrations or against the same fungal species.

The synergistic composition is effective in use with plants in a disease inhibiting and phytologically acceptable amount. The term "disease inhibiting and phytologically acceptable amount" refers to an amount of the synergistic composition that kills or inhibits the plant disease for which control is desired, but is not significantly toxic to the plant. This amount will generally be from about 1 to about 1000 ppm, with about 2 to about 500 ppm being preferred. The exact concentration of synergistic composition required varies with the fungal disease to be controlled, the type of formulation employed, the method of application, the particular plant species, climate conditions, and the like. A suitable application rate for the synergistic composition typically corresponds to about 0.10 to about 4 pounds/acre (about 0.1 to 0.45 grams per square meter g/$m^2$).

## EXAMPLES

The following examples are provided to further illustrate the invention. They are not meant to be construed as limiting the invention.

Preparation of Composition III and Compound IIIa

i) The composition of formula III in all examples was prepared in accordance with WO 02/40431 A2, which was published on 23 May 2001. Compound IIIa was separated from the composition of formula III by separation techniques known in the art.

**Example I Synergistic mixture of i) and ii) a)**

i) Example I utilizes both the Composition of formula III and the Compound of formula IIIa to prepare the sumergistic compositions for testing.
ii) A commercial form of zoxamide (formula II) available from Dow AgroSciences LLC in its technical form, or as a suspension concentrate, was utilized to prepare the synergistic compositions for testing.

Biological Testing

The synergistic compositions were formulated in 10 vol% acetone plus 90 vol% Triton X water (deionized water 99.99 wt% + 0.01 wt% Triton X100). The synergistic compositions were tested for ability to control plant diseases at the whole plant level in 4-day protectant tests (4DP). Chemicals were sprayed on a turn table sprayer fitted with two opposing air atomization nozzles which delivered approximately 1000 Uha of spray volume. Plants were inoculated with spores of the fungus 4 days following application of the synergistic composition, then incubated in an environment conducive to disease development. Disease severity was evaluated 4 to 7 days later, depending on the speed of disease development.

The following experiments were performed in the laboratory to determine the synergistic fungicidal efficacy of zoxamide in combination with composition of formula III or the compound of formula IIIa.

Late Blight of Tomatoes (*Phytophthora infestans-PHYTIN)*

Tomatoes (*cultivar* Outdoor Girl) were grown from seed in a soilless peat-based potting mixture (Metromix) until the seedlings were 1-2 leaf (BBCH 12). These plants were then sprayed to run off with a suspension of the formulated composition at the rates, in ppm, shown in Tables 1 and 2. After 96 hours the test plants were inoculated with an aqueous spore suspension of *Phytophthora infestans* and incubated overnight in a dew chamber. The plants were then transferred to the greenhouse until disease developed on the untreated control plants.

Downy Mildew of Grapes (*Plasmopara viticola* - PLASVI)

Grape plants (variety "Carignane") were grown from seed in a greenhouse for six weeks in a soil-less potting mix until the seedlings were at a 2-3-leaf stage. These plants were sprayed to runoff with the formulated composition at the rates, in ppm, shown in Tables 3 and 4. After 96 hours the undersides of the leaves were inoculated with an aqueous spore suspension of *Plasmopara viticola* and the plants were kept in high humidity overnight. The plants were then transferred to a greenhouse until disease developed on untreated control plants.

The following Tables provide the level of control provided by zoxamide, by the compositions of the formula III, and by the compound of formula IIIa, and by their combinations with zoxamide. For each combination a synergy factor is calculated and provided. A synergy factor (SF) greater than one indicates a synergistic effect. Each of the combinations tested demonstrated a synergistic effect. The term "synergy factor" is based on a concept originally defined by S. R. Colby in his article entitled "Calculation of the synergistic and antagonistic responses of herbicide combinations" published in the journal Weeds, 1967, 15, p. 20-22. According to Colby, synergy is evaluated by the ratio between the observed experimental efficacy of the mixture and the expected efficacy calculated from the performance of each fungicide composition or compound applied alone. This ratio is also called the synergy factor (SF). The formula to predict expected efficacy of a mixture as percent disease control is:

$$\text{Exp.} = A + B - (A \times B/100)$$

in which Exp. is the expected efficacy, A and B are the respective efficacies (as percent control) given achieved by the individual fungicides at given rates. For example, if compound A's efficacy is 40% at X ppm and compound B's efficacy is 50% at Y ppm, the expected efficacy for a mixture containing X ppm of compound A and Y ppm of compound B will be 70%, calculated as '40+50-(40*50/100)'. If the observed efficacy is greater than the expected efficacy, the ratio, or SF, is greater than 1, indicating synergy between the two compounds. If the observed efficacy is equal to the expected efficacy, the SF is 1, indicating an additive relationship between the two compounds. An observed efficacy of less than

the expected efficacy, i.e. the SF is less than 1, is an indication of antagonism between the two compounds.

A synergistic effect can be demonstrated with combinations i) compositions of formula III, or a compound of IIIa, and ii) zoxamide. Particular ratios of zoxamide and the composition of formula III, or a compound of formula IIIa are expected to exhibit even greater synergistic fungicidal activity than demonstrated by the data provided in Tables 1-4 as evidenced by even higher SF's. The determination of such further enhanced fungicidal activity is well within the ability of one skilled in this art utilizing the techniques taught herein.

Table 1 - PHYTIN (4DP)

| i)Formula III Concentration (ppm) | ii)Zoxamide Concentration (ppm) | % Disease Control (Observed) | % Disease Control (Predicted) | Synergy Factor |
|---|---|---|---|---|
| 5.60 | 11.20 | 50.90 | 36.33 | 1.40 |
| 5.60 | 16.70 | 90.90 | 72.3 | 1.26 |
| 5.60 | | 21.10 | | |
| | 11.20 | 19.30 | | |
| | 16.70 | 34.90 | | |

Table 2 - PHYTIN (4DP)

| i)Formula IIIa Concentration (ppm) | ii)Zoxamide Concentration (ppm) | % Disease Control (Observed) | % Disease Control (Predicted) | Synergy Factor |
|---|---|---|---|---|
| 1.90 | 1.90 | 100.00 | 90.60 | 1.10 |
| 0.60 | 1.90 | 77.20 | 60.00 | 1.29 |
| 1.90 | | 78.90 | | |
| 0.60 | | 10.50 | | |
| | 1.90 | 55.30 | | |

Table 3- PLASVI (4DP)

| i)Formula III Concentration (ppm) | ii)Zoxamide Concentration (ppm) | % Disease Control (Observed) | % Disease Control (Predicted) | Synergy Factor |
|---|---|---|---|---|
| 1.90 | 1.90 | 50.90 | 30.2 | 1.68 |
| 1.90 | | 26.30 | | |
| | 1.90 | 5.30 | | |

Table 4 - PLASVI (4DP)

| i)Formula IIIa Concentration (ppm) | ii)Zoxamide Concentration (ppm) | % Disease Control (Observed) | % Disease Control (Predicted) | Synergy Factor |
|---|---|---|---|---|
| 1.90 | 5.60 | 86.00 | 63.80 | 1.35 |
| 1.90 | 1.90 | 29.80 | 18.60 | 1.61 |
| 1.90 | | 14.00 | | |
| | 5.60 | 57.90 | | |

(continued)

| i)Formula IIIa Concentration (ppm) | ii)Zoxamide Concentration (ppm) | % Disease Control (Observed) | % Disease Control (Predicted) | Synergy Factor |
|---|---|---|---|---|
| | 1.90 | 5.30 | | |

**Example II Synergistic mixture of i) and ii) b)**

Commercially available SC formulations of fluazinam, cyazofamid and WP formulations of copper hydroxide, copper oxychloride and fosetyl-Al were utilized to prepare the synergistic compositions for testing. All other compounds under b) were tested as technical materials formulated as generic EC's, except for benthivalicarb which was formulated as an SC. Composition i) was formulated either as an SC, WP or EC according to the specific formulation type of the commercial product used in the synergistic composition.

Biological Testing

The synergistic compositions prepared from technical materials were, with the exception of benthivalicarb, formulated in 10 vol% acetone plus 90 vol% Triton X100 water (deionized water 99.99 wt% + 0.01 wt% Triton X100). Synergistic compositions prepared from wettable powders (WP's) or suspension concentrates (SC's), including benthivalicarb, were dispersed in water prior to application. The synergistic compositions were tested for ability to control plant diseases at the whole plant level in 1 , 2, 3, 4 or 7-day protectant (1 DP, 2DP, 3DP, 4DP & 7DP) and 1-day curative (1 DC) tests. Chemicals were sprayed on a turntable sprayer fitted with two opposing air atomization nozzles which delivered approximately 1000 Uha of spray volume. Plants were inoculated with spores of the fungus either 1 day prior to or 1, 2,3, 4 or 7 days following application of the synergistic composition, then incubated in an environment conducive to disease development. Disease severity was evaluated 4 to 7 days later, depending on the speed of disease development.

The following experiments were performed in the laboratory to determine the synergistic fungicidal efficacy.

Late Blight of Tomatoes (*Phytoiphthora* infestans-PHYTIN)

Tomatoes *(cultivar* Outdoor Girl) were grown from seed in a soilless peat-based potting mixture (Metromix) until the seedlings were at the 1-2 leaf stage. These plants were then sprayed to run off with a suspension of the formulated composition at the rates, in ppm, shown in Tables 5, 7, 9, 11, 13, 15, 17, 19, 21, 23, 25, 27, 29, 33, 34, 35, 37, and 39. Either 1 day before or 1, 2, 3 or 4 days after application, depending on the test, the treated plants were inoculated with an aqueous spore suspension of *Phytophthora infestans* and incubated overnight in a dew chamber. The plants were then transferred to the greenhouse until disease developed on the untreated control plants.

Downy Mildew of Grapes (*Plasmopara viticola* - PLASVI)

Grape plants (variety "Carignane") were grown from seed in a greenhouse for six weeks in a soil-less potting mix until the seedlings were at a 2-3-leaf stage. These plants were sprayed to runoff with the formulated composition at the rates, in ppm, shown in Tables 6, 8, 10, 12, 14, 16, 18, 20, 22, 24, 26, 28, 30, 31, 32, 36, 38, and 40. Either 1 day before or 1, 2,3 or 7 days after application, depending on the tests, the undersides of the leaves were inoculated with an aqueous spore suspension of *Plasmopara viticola* and the plants were kept in high humidity overnight. The plants were then transferred to a greenhouse until disease developed on untreated control plants.

The following Tables show the levels of control provided. For each combination a synergy factor is calculated and provided.

A synergistic effect can be demonstrated with combinations of i) the composition of formula III and ii) compounds from b). Particular ratios are expected to exhibit even greater synergistic fungicidal activity than demonstrated by the data provided in Tables 1-40, as evidenced by even higher SF's. The determination of such further enhanced fungicidal activity is well within the ability of one skilled in this art utilizing the techniques taught herein.

Table 5 PHYTIN (1 DP)

| i)Formula III concentration (ppm) | ii)Chlorothalonil concentration (ppm) | % Disease Control (observed) | % Disease Control (predicted) | Synergy Factor |
|---|---|---|---|---|
| 5.56 | 5.56 | 100 | 96.5 | 1.04 |
| 5.56 | | 96.5 | | |
| | 5.56 | 0.0 | | |

Table 6 PLASVI (1 DP)

| i)Formula III concentration (ppm) | ii)Chlorothalonil concentration (ppm) | % Disease Control (observed) | % Disease Control (predicted) | Synergy Factor |
|---|---|---|---|---|
| 1.85 | 1.85 | 87.7 | 71.9 | 1.22 |
| 1.85 | | 71.9 | | |
| | 1.85 | 0.0 | | |

Table 7 PHYTIN (3DP)

| i)Formula III concentration (ppm) | ii)$Cu(OH)_2$ concentration (ppm) | % Disease Control (observed) | % Disease Control (predicted) | Synergy Factor |
|---|---|---|---|---|
| 1.85 | 5.56 | 52.6 | 30.6 | 1.72 |
| 1.85 | | 19.3 | | |
| | 5.56 | 14.0 | | |

Table 8 PLASVI (3DP)

| i)Formula III concentration (ppm) | ii)$Cu(OH)_2$ concentration (ppm) | % Disease Control (observed) | % Disease Control (predicted) | Synergy Factor |
|---|---|---|---|---|
| 5.56 | 16.70 | 50.9 | 38.8 | 1.31 |
| 5.56 | | 31.6 | | |
| | 16.70 | 10.5 | | |

Table 9 PHYTIN (3DP)

| i)Formula III concentration (ppm) | ii)Cu oxychloride concentration (ppm) | % Disease Control (observed) | % Disease Control (predicted) | Synergy Factor |
|---|---|---|---|---|
| 5.56 | 16.70 | 96.5 | 68.3 | 1.41 |
| 1.85 | 5.56 | 35.1 | 33.4 | 1.05 |
| 5.56 | | 57.9 | | |
| 1.85 | | 19.3 | | |
| | 16.70 | 24.6 | | |
| | 5.56 | 17.5 | | |

Table 10 PHYTIN (3DP)

| i)Formula III concentration (ppm) | ii) Cu oxychloride concentration (ppm) | % Disease Control (observed) | % Disease Control (predicted) | Synergy Factor |
|---|---|---|---|---|
| 5.56 | 16.70 | 57.9 | 36.4 | 1.59 |
| 5.56 | | 31.6 | | |
| | 16.70 | 7.0 | | |

Table 11 PHYTIN (1DP)

| i)Formula III concentration (ppm) | ii)Folpet concentration (ppm) | % Disease Control (observed) | % Disease Control (predicted) | Synergy Factor |
|---|---|---|---|---|
| 0.62 | 0.62 | 21.1 | 14.0 | 1.50 |
| 0.62 | | 14.0 | | |
| | 0.62 | 0.0 | | |

Table 12 PLASVI (1DP)

| i)Formula III concentration (ppm) | ii)Folpet concentration (ppm) | % Disease Control (observed) | % Disease Control (predicted) | Synergy Factor |
|---|---|---|---|---|
| 5.56 | 5.56 | 94.4 | 78.9 | 1.20 |
| 5.56 | | 78.9 | | |
| | 5.56 | 0.0 | | |

Table 13 PHYTIN (1 DP)

| i)Formula III concentration (ppm) | ii)Captan concentration (ppm) | % Disease Control (observed) | % Disease Control (predicted) | Synergy Factor |
|---|---|---|---|---|
| 5.56 | 5.56 | 56.1 | 22.8 | 2.46 |
| 5.56 | | 22.8 | | |
| | 5.56 | 0.0 | | |

Table 14 PLASVI (1 DP)

| i)Formula III concentration (ppm) | ii)Pyraclostrobi n concentration (ppm) | % Disease Control (observed) | % Disease Control (predicted) | Synergy Factor |
|---|---|---|---|---|
| 5.56 | 5.56 | 86.0 | 78.9 | 1.09 |
| 1.85 | 1.85 | 33.3 | 24.6 | 1.36 |
| 5.56 | | 78.9 | | |
| 1.85 | | 24.6 | | |
| | 5.56 | 0.0 | | |
| | 1.85 | 0.0 | | |

Table 15 PHYTIN (3DP)

| i)Formula III concentration (ppm) | ii)Fluazinam concentration (ppm) | % Disease Control (observed) | % Disease Control (predicted) | Synergy Factor |
|---|---|---|---|---|
| 5.56 | 5.56 | 93.0 | 81.0 | 1.15 |
| 1.85 | 1.85 | 64.9 | 58.4 | 1.11 |
| 5.56 | | 61.4 | | |
| 1.85 | | 52.6 | | |
| | 5.56 | 50.9 | | |
| | 1.85 | 12.3 | | |

Table 16 PLASVI (2DP)

| i)Formula III concentration (ppm) | ii)Fluazinam concentration (ppm) | % Disease Control (observed) | % Disease Control (predicted) | Synergy Factor |
|---|---|---|---|---|
| 1.85 | 1.85 | 56.1 | 27.6 | 2.03 |
| 1.85 | | 15.8 | | |
| | 1.85 | 14.0 | | |

Table 17 PHYTIN (3DP)

| i)Formula III concentration (ppm) | ii)Cyazofamid concentration (ppm) | % Disease Control (observed) | % Disease Control (predicted) | Synergy Factor |
|---|---|---|---|---|
| 0.62 | 0.62 | 99.6 | 82.5 | 1.21 |
| 0.21 | 0.62 | 94.0 | 82.5 | 1,14 |
| 0.62 | | 0.0 | | |
| 0.21 | | 0.0 | | |
| | 0.62 | 82.5 | | |

Table 18 PLASVI (3DP)

| i)Formula III concentration (ppm) | ii)Cyazofamid concentration (ppm) | % Disease Control (observed) | % Disease Control (predicted) | Synergy Factor |
|---|---|---|---|---|
| 1.85 | 1.85 | 100 | 82.2 | 1.22 |
| 0.62 | 1.85 | 90.5 | 78.9 | 1.15 |
| 0.21 | 0.62 | 57.9 | 7.0 | 8.27 |
| 0.62 | | 0.0 | | |
| 0.21 | | 0.0 | | |
| | 0.62 | 7.0 | | |

Table 19 PHYTIN (2DP)

| i)Formula III concentration (ppm) | ii)Ethaboxam concentration (ppm) | % Disease Control (observed) | % Disease Control (predicted) | Synergy Factor |
|---|---|---|---|---|
| 0.62 | 0.62 | 31.6 | 18.4 | 1.72 |
| 0.62 | | 8.8 | | |
| | 0.62 | 10.5 | | |

Table 20 PI ASVI (2DP)

| i)Formula III concentration (ppm) | ii)Ethaboxam concentration (ppm) | % Disease Control (observed) | % Disease Control (predicted) | Synergy Factor |
|---|---|---|---|---|
| 5.56 | 5.56 | 98.2 | 90.7 | 1.08 |
| 1.85 | 1.85 | 59.6 | 55.2 | 1.08 |
| 5.56 | | 56.1 | | |
| 1.85 | | 8.8 | | |
| | 5.56 | 78.9 | | |
| | 1.85 | 50.9 | | |

Table 21 PHYTIN (1 DC)

| i)Formula III concentration (ppm) | ii)Cymoxanil concentration (ppm) | % Disease Control (observed) | % Disease Control (predicted) | Synergy Factor |
|---|---|---|---|---|
| 16.70 | 16.70 | 99.6 | 65.2 | 1.53 |
| 2.80 | 16.70 | 64.9 | 51.8 | 1.25 |
| 16.70 | | 31.6 | | |
| 2.80 | | 5.30 | | |
| | 16.7 | 49.1 | | |

Table 22 PLASVI (1 DC)

| i)Formula III concentration (ppm) | ii)Cymoxanil concentration (ppm) | % Disease Control (observed) | % Disease Control (predicted) | Synergy Factor |
|---|---|---|---|---|
| 16.70 | 16.70 | 98.9 | 64.7 | 1.53 |
| 5.56 | 5.56 | 59.6 | 26.2 | 2.28 |
| 2.80 | 16.70 | 56.1 | 40.8 | 1.38 |
| 16.70 | | 45.6 | | |
| 5.56 | | 17.5 | | |
| 2.80 | | 8.8 | | |
| | 16.70 | 35.1 | | |

(continued)

| i)Formula III concentration (ppm) | ii)Cymoxanil concentration (ppm) | % Disease Control (observed) | % Disease Control (predicted) | Synergy Factor |
|---|---|---|---|---|
| | 5.56 | 10.5 | | |

Table 23 PHYTIN (1DC)

| i)Formula III concentration (ppm) | ii)Dimethomorph concentration (ppm) | % Disease Control (observed) | % Disease Control (predicted) | Synergy Factor |
|---|---|---|---|---|
| 16.70 | 16.70 | 89.5 | 52.0 | 1.72 |
| 5.56 | 5.56 | 28.1 | 5.3 | 5.30 |
| 8.30 | 50.00 | 99.6 | 39.2 | 2.54 |
| 16.70 | | 31.6 | | |
| 5.56 | | 5.3 | | |
| 8.30 | | 8.8 | | |
| | 50.00 | 33.3 | | |
| | 16.70 | 29.8 | | |
| | 5.56 | 0.0 | | |

Table 24 PLASVI (1DC)

| i)Formula III concentration (ppm) | ii)Dimethomorph concentration (ppm) | % Disease Control (observed) | % Disease Control (predicted) | Synergy Factor |
|---|---|---|---|---|
| 5.56 | 5.56 | 35.1 | 24.8 | 1.42 |
| 5.56 | | 17.5 | | |
| | 5.56 | 8.8 | | |

Table 25 PHYTIN (3DP)

| i)Formula III concentration (ppm) | ii)Dimethomorph concentration (ppm) | % Disease Control (observed) | % Disease Control (predicted) | Synergy Factor |
|---|---|---|---|---|
| 1.85 | 1.85 | 83.9 | 55.4 | 1.52 |
| 0.62 | 0.62 | 54.4 | 29.8 | 1.83 |
| 0.30 | 1.85 | 24.6 | 12.3 | 2.00 |
| 1.85 | | 49.1 | | |
| 0.62 | | 29.8 | | |
| 0.30 | | 0.0 | | |
| | 1.85 | 12.3 | | |
| | 0.62 | 0.0 | | |

Table 26 PLASVI (3DP)

| i)Formula III concentration (ppm) | ii)Dimethomorph concentration (ppm) | % Disease Control (observed) | % Disease Control (predicted) | Synergy Factor |
|---|---|---|---|---|
| 1.85 | 1.85 | 52.6 | 36.8 | 1.43 |
| 0.90 | 5.56 | 73.7 | 63.9 | 1.15 |
| 1.85 | | 33.3 | | |
| 0.90 | | 1.8 | | |
| | 5.56 | 63.2 | | |
| | 1.85 | 5.3 | | |

Table 27 PHYTIN (4DP)

| i)Formula III concentration (ppm) | ii)Fosetyl-Al [0057] conce ntration (ppm) | % Disease Control (observed) | % Disease Control (predicted) | Synergy Factor |
|---|---|---|---|---|
| 1.85 | 1.85 | 56.1 | 38.6 | 1.45 |
| 1.85 | | 38.6 | | |
| | 1.85 | 0.0 | | |

Table 28 PLASVI (7DP)

| i)Formula III concentration (ppm) | ii)Fosetyl-Al [0058] conce ntration (ppm) | % Disease Control (observed) | % Disease Control (predicted) | Synergy Factor |
|---|---|---|---|---|
| 5.56 | 5.56 | 75.4 | 57.6 | 1.31 |
| 5.56 | 16.70 | 81.6 | 58.5 | 1.40 |
| 1.85 | 1.85 | 54.4 | 21.6 | 2.52 |
| 1.85 | 5.56 | 56.1 | 23.1 | 2.43 |
| 5.56 | | 52.6 | | |
| 1.85 | | 14.0 | | |
| | 16.70 | 12.3 | | |
| | 5.56 | 10.5 | | |
| | 1.85 | 8.8 | | |

Table 29 PHYTIN (3DP)

| i)Formula III concentration (ppm) | ii)Iprovalicarb concentration (ppm) | % Disease Control (observed) | % Disease Control (predicted) | Synergy Factor |
|---|---|---|---|---|
| 2.80 | 16.70 | 96.1 | 64.9 | 1.48 |
| 0.90 | 5.56 | 68.4 | 32.8 | 2.09 |
| 2.80 | | 47.4 | | |
| 0.90 | | 1.8 | | |
| | 16.70 | 33.3 | | |
| | 5.56 | 1.8 | | |

Table 30 PLASVI (3DP)

| i)Formula III concentration (ppm) | ii)Iprovalicarb concentration (ppm) | % Disease Control (observed) | % Disease Control (predicted) | Synergy Factor |
|---|---|---|---|---|
| 0.90 | 5.56 | 50.9 | 37.9 | 1.34 |
| 0.30 | 1.85 | 12.3 | 8.8 | 1.40 |
| 0.90 | | 15.8 | | |
| 0.30 | | 0.0 | | |
| | 5.56 | 26.3 | | |
| | 1.85 | 8.8 | | |

Table 31 PLASVI (1DC)

| i)Formula III concentration (ppm) | ii)Iprovalicarb concentration (ppm) | % Disease Control (observed) | % Disease Control (predicted) | Synergy Factor |
|---|---|---|---|---|
| 2.80 | 16.70 | 80.0 | 58.0 | 1.38 |
| 0.90 | 5.56 | 60.0 | 40.0 | 1.50 |
| 2.80 | | 16.0 | | |
| 0.90 | | 0.0 | | |
| | 16.70 | 50.0 | | |
| | 5.56 | 40.0 | | |

Table 32 PLASVI (1DP)

| i)Formula III concentration (ppm) | ii)Benthivalicarb concentration (ppm) | % Disease Control (observed) | % Disease Control (predicted) | Synergy Factor |
|---|---|---|---|---|
| 0.62 | 0.62 | 78.9 | 65.3 | 1.21 |
| 0.62 | | 17.5 | | |
| | 0.62 | 57.9 | | |

Table 33 PHYTIN (1DP)

| i)Formula III concentration (ppm) | ii)Benthivalicarb concentration (ppm) | % Disease Control (observed) | % Disease Control (predicted) | Synergy Factor |
|---|---|---|---|---|
| 0.62 | 0.62 | 89.1 | 31.6 | 2.82 |
| 0.62 | | 0.0 | | |
| | 0.62 | 31.6 | | |

Table 34 PHYTIN (1DC)

| i)Formula III concentration (ppm) | ii)Benthivalicarb concentration (ppm) | % Disease Control (observed) | % Disease Control (predicted) | Synergy Factor |
|---|---|---|---|---|
| 0.62 | 0.62 | 56.1 | 28.1 | 2.00 |
| 0.62 | | 0.0 | | |
| | 0.62 | 28.1 | | |

Table 35 PHYTIN (2DP)

| i)Formula III concentration (ppm) | ii)Compound 1* concentration (ppm) | % Disease Control (observed) | % Disease Control (predicted) | Synergy Factor |
|---|---|---|---|---|
| 1.85 | 1.85 | 91.2 | 74.9 | 1.22 |
| 0.62 | 0.62 | 31.6 | 15.2 | 2.08 |
| 1.85 | | 57.9 | | |
| 0.62 | | 8.8 | | |
| | 1.85 | 40.4 | | |
| | 0.62 | 7.0 | | |
| *Compound 1 is methyl (±)RS-[3-(N-isopropoxycarbonyl-S-valinyl)amino]-3-(4-chlorophenyl)propanoate | | | | |

Table 36 PLASVI (2DP)

| i)Formula III concentration (ppm) | ii)Compound 1 concentration (ppm) | % Disease Control (observed) | % Disease Control (predicted) | Synergy Factor |
|---|---|---|---|---|
| 1.85 | 1.85 | 38.6 | 13.6 | 2.84 |
| 1.85 | | 8.8 | | |
| | 1.85 | 5.3 | | |

Table 37 PHYTIN (2DP)

| i)Formula III concentration (ppm) | ii)Propamocarb concentration (ppm) | % Disease Control (observed) | % Disease Control (predicted) | Synergy Factor |
|---|---|---|---|---|
| 1.85 | 1.85 | 71.9 | 58.7 | 1.23 |
| 0.62 | 0.62 | 28.1 | 8.8 | 3.19 |
| 1.85 | | 57.9 | | |
| 0.62 | | 8.8 | | |
| | 1.85 | 1.8 | | |
| | 0.62 | 0.0 | | |

Table 38 PLASVI (2DP)

| i)Formula III concentration (ppm) | ii)Propamocarb concentration (ppm) | % Disease Control (observed) | % Disease Control (predicted) | Synergy Factor |
|---|---|---|---|---|
| 5.56 | 5.56 | 70.2 | 56.1 | 1.25 |
| 5.56 | | 56.1 | | |
| | 5.56 | 0.0 | | |

Table 39 PHYTIN (3DP)

| i)Formula III concentration (ppm) | ii)Compound 2** concentration (ppm) | % Disease Control (observed ) | % Disease Control (predicted) | Synergy Factor |
|---|---|---|---|---|
| 1.85 | 5.56 | 94.7 | 90.9 | 1.04 |
| 0.62 | 1.85 | 91.2 | 52.6 | 1.73 |
| 1.85 | | 26.3 | | |
| 0.62 | | 3.5 | | |
| | 5.56 | 87.7 | | |
| | 1.85 | 50.9 | | |
| **Compound 2 is defined as: 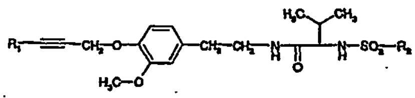 wherein R1 is 4-Cl-C6H5 and R2 is CH3 (compound no. 1.14 in Patent WO 02/21918 published 3/21/02. | | | | |

Table 40 PLASVI (3DP)

| i)Formula III concentration (ppm) | ii)Compound 2 concentration (ppm) | % Disease Control (observed) | % Disease Control (predicted) | Synergy Factor |
|---|---|---|---|---|
| 1.85 | 5:56 | 82.1 | 61.3 | 1.34 |
| 0.62 | 1.85 | 33.3 | 24.8 | 1.35 |
| 1.85 | | 21.1 | | |
| 0.62 | | 8.8 | | |
| | 5.56 | 50.9 | | |
| | 1.85 | 17.5 | | |

**Example III Synergistic mixture of i) and ii) c)**

Commercially available SC or WP formulations of the strobilurins and technical famoxadone formulated as an EC were utilized to prepare the synergistic compositions for testing. Composition i) was formulated either as an SC, WP or EC according to the specific formulation type of the commercial product used in the synergistic composition.

Biological Testing

The synergistic compositions prepared from technical materials were formulated in 10 vol% acetone plus 90 vol% Triton X100 water (deionized water 99.99 wt% + 0.01 wt% Triton X100). Synergistic compositions prepared from emulsifiable concentrates (EC's) or suspension concentrates (SC's) were dispersed in water prior to application. The synergistic compositions were tested for ability to control plant diseases at the whole plant level in 2 to 3-day protectant

tests (2DP& 3DP). Chemicals were sprayed on a turntable sprayer fitted with two opposing air atomization nozzles which delivered approximately 1000 Uha of spray volume. Plants were inoculated with spores of the fungus either 2 or 3 days following application of the synergistic composition, then incubated in an environment conducive to disease development. Disease severity was evaluated 4 to 7 days later, depending on the speed of disease development.

The following experiments were performed in the laboratory to determine the synergistic fungicidal efficacy.

Late Blight of Tomatoes *(Phytophthora* infestans-PHYTIN)

Tomatoes (*cultivar* Outdoor Girl) were grown from seed in a soilless peat-based potting mixture (Metromix) until the seedlings were at the 1-2 leaf stage . These plants were then sprayed to run off with a suspension of the formulated composition at the rates, in ppm, shown in Tables 41, 43, 45, 47 and 49. Either 2 or 3 days after application, depending on the test, the treated plants were inoculated with an aqueous spore suspension of *Phytophthora infestans* and incubated overnight in a dew chamber. The plants were then transferred to the greenhouse until disease developed on the untreated control plants.

Downy Mildew of Grapes *(Plasmopara viticola* - PLASVI)

Grape plants (variety "Carignane") were grown from seed in a greenhouse for six weeks in a soil-less potting mix until the seedlings were at a 2-3-leaf stage. These plants were sprayed to runoff with the formulated composition at the rates, in ppm, shown in Tables 42, 44, 46, 48, and 50. Either 2 or 3 days after application, depending on the tests, the undersides of the leaves were inoculated with an aqueous spore suspension of *Plasmopara viticola* and the plants were kept in high humidity overnight. The plants were then transferred to a greenhouse until disease developed on untreated control plants.

The following Tables show the levels of control provided. For each combination a synergy factor is calculated and provided.

A synergistic effect can be demonstrated with combinations of Qo-site inhibitors of c) and the composition of formula lll. Particular ratios are expected to exhibit even greater synergistic fungicidal activity than demonstrated by the data provided in Tables 41-50 , as evidenced by even higher SF's. The determination of such further enhanced fungicidal activity is well within the ability of one skilled in this art utilizing the techniques taught herein.

Table 41 PHYTIN (3DP)

| i)Formula III concentration (ppm) | ii)Azoxystrobin concentration (ppm) | % Disease Control (observed) | % Disease Control (predicted) | Synergy Factor |
|---|---|---|---|---|
| 1.85 | 5.56 | 99.6 | 89.5 | 1.11 |
| 1.85 | | 84.2 | | |
| | 5.56 | 33.3 | | |

Table 42 PLASVI (3DP)

| i)Formula III concentration (ppm) | ii)Azoxystrobin concentration (ppm) | % Disease Control (observed) | % Disease Control (predicted) | Synergy Factor |
|---|---|---|---|---|
| 1.85 | 1.85 | 71.9 | 39.5 | 1.82 |
| 1.85 | 5.56 | 96.1 | 66.0 | 1.46 |
| 0.62 | 1.85 | 83.9 | 28.1 | 2.99 |
| 1.85 | | 15.8 | | |
| 0.62 | | 0.0 | | |
| | 5.56 | 59.6 | | |
| | 1.85 | 28.1 | | |

Table 43 PHYTIN (3DP)

| i)Formula III concentration (ppm) | ii)Picoxystrobin concentration (ppm) | % Disease Control (observed) | % Disease Control (predicted) | Synergy Factor |
|---|---|---|---|---|
| 5.56 | 5.56 | 100.0 | 84.4 | 1.18 |
| 5.56 | | 61.4 | | |
| | 5.56 | 59.6 | | |

Table 44 PLASVI (3DP)

| i)Formula III concentration (ppm) | ii)Picoxystrobin concentration (ppm) | % Disease Control (observed) | % Disease Control (predicted) | Synergy Factor |
|---|---|---|---|---|
| 5.56 | 5.56 | 84.2 | 77.0 | .09 |
| 5.56 | | 40.4 | | |
| | 5.56 | 61.4 | | |

Table 45 PHYTIN (2DP)

| i)Formula III concentration (ppm) | ii)Pyraclostrobi n concentration (ppm) | % Disease Control (observed) | % Disease Control (predicted) | Synergy Factor |
|---|---|---|---|---|
| 5.56 | 5.56 | 98.2 | 90.8 | 1.08 |
| 1.85 | 1.85 | 93.0 | 79.3 | 1.17 |
| 5.56 | | 12.3 | | |
| 1.85 | | 1.8 | | |
| | 5.56 | 89.5 | | |
| | 1.85 | 78.9 | | |

Table 46 PLASVI (2DP)

| i)Formula III concentration (ppm) | ii)Pyraclostrobin concentration (ppm) | % Disease Control (observed) | % Disease Control (predicted) | Synergy Factor |
|---|---|---|---|---|
| 0.62 | 0.62 | 78.6 | 62.1 | 1.27 |
| 0.62 | | 1.8 | | |
| | 0.62 | 61.4 | | |

Table 47 PHYTIN (2DP)

| i)Formula III concentration (ppm) | ii)Trifloxystrobin concentration (ppm) | % Disease Control (observed) | % Disease Control (predicted) | Synergy Factor |
|---|---|---|---|---|
| 1.85 | 1.85 | 78.9 | 44.4 | 1.78 |

(continued)

| i)Formula III concentration (ppm) | ii)Trifloxystrobin concentration (ppm) | % Disease Control (observed) | % Disease Control (predicted) | Synergy Factor |
|---|---|---|---|---|
| 1.85 | | 26.3 | | |
| | 1.85 | 24.6 | | |

Table 48 PLASVI (2DP)

| i)Formula III concentration (ppm) | ii)Trifloxystrobin concentration (ppm) | % Disease Control (observed) | % Disease Control (predicted) | Synergy Factor |
|---|---|---|---|---|
| 1.85 | 1.85 | 36.8 | 33.6 | 1.10 |
| 0.62 | 0.62 | 31.6 | 5.2 | 6.03 |
| 1.85 | | 15.8 | | |
| 0.62 | | 3.5 | | |
| | 1.85 | 21.1 | | |
| | 0.62 | 1.8 | | |

Table 49 PHYTIN (2DP)

| i)Formula III concentration (ppm) | ii)Famoxadone concentration (ppm) | % Disease Control (observed) | % Disease Control (predicted) | Synergy Factor |
|---|---|---|---|---|
| 1.85 | 1.85 | 86.0 | 77.9 | 1.10 |
| 1.85 | | 57.9 | | |
| | 1.85 | 47.4 | | |

Table 50 (PLASVI (2DP)

| i)Formula III concentration (ppm) | ii)Famoxadone concentration (ppm) | % Disease Control (observed) | % Disease Control (predicted) | Synergy Factor |
|---|---|---|---|---|
| 1.85 | 1.85 | 75.4 | 37.6 | 2.01 |
| 1.85 | | 8.8 | | |
| | 1.85 | 31.6 | | |

**Example IV Synergistic mixture of i) and ii) d)**

Commercially available acylalanines in their technical forms, or as an EC formulated product, were utilized as ii) to prepare the synergistic compositions for testing.

Biological Testing

The synergistic compositions prepared from technical materials were formulated in 10 vol% acetone plus 90 vol% Triton X100 water (deionized water 99.99 wt%+ 0.01 wt% Triton X100). Synergistic compositions prepared from emulsifiable concentrates (EC's) were dispersed in water prior to application. The synergistic compositions were tested

for ability to control plant diseases at the whole plant level in 1 day curative (1 DC) and 1 to 3-day protectant tests (1 DP& 3DP). Chemicals were sprayed on a turntable sprayer fitted with two opposing air atomization nozzles which delivered approximately 1000 Uha of spray volume. Plants were inoculated with spores of the fungus either 1 day prior to (1 DC), or 1 to 3 days following application of the synergistic composition, then incubated in an environment conducive to disease development. Disease severity was evaluated 4 to 7 days later, depending on the speed of disease development.

The following experiments were performed in the laboratory to determine the synergistic fungicidal efficacy.

Late Blight of Tomatoes (*Phytophthora infestans*-PHYTIN)

Tomatoes (*cultivar* Outdoor Girl) were grown from seed in a soilless peat-based potting mixture (Metromix) until the seedlings were at the 1-2 leaf stage . These plants were then sprayed to run off with a suspension of the formulated composition at the rates, in ppm, shown in Tables 51, 53, 55, 57, 59, 61, and 62. One day before, or either 1 or 3 days after application, depending on the test, the treated plants were inoculated with an aqueous spore suspension of *Phytophthora infestans* and incubated overnight in a dew chamber. The plants were then transferred to the greenhouse until disease developed on the untreated control plants.

Downy Mildew of Grapes *(Plasmopara viticola* - PLASVI)

Grape plants (variety "Carignane") were grown from seed in a greenhouse for six weeks in a soil-less potting mix until the seedlings were at a 2-3-leaf stage. These plants were sprayed to runoff with the formulated composition at the rates, in ppm, shown in Tables 52, 54, 56, 58, 60 and 63. Either one day before or 1 to 3 days after application, depending on the tests, the undersides of the leaves were inoculated with an aqueous spore suspension of *Plasmopara viticola* and the plants were kept in high humidity overnight. The plants were then transferred to a greenhouse until disease developed on untreated control plants.

The following Tables show the levels of control provided by acylalanines, by the compositions of formula I and by their combinations with acylalanines. For each combination a synergy factor is calculated and provided.

A synergistic effect can be demonstrated with combinations of acylalanines and the composition of Formula III. Particular ratios of acylalanines and the composition of Formula III or the compound of formula IIIa are expected to exhibit even greater synergistic fungicidal activity than demonstrated by the data provided in Tables 51-63, as evidenced by even higher SF's. The determination of such further enhanced fungicidal activity is well within the ability of one skilled in this art utilizing the techniques taught herein.

Table 51 PHYTIN (1DC)

| i)Formula III concentration (ppm) | ii)Mefenoxam concentration (ppm) | % Disease Control (observed) | % Disease Control (predicted) | Synergy Factor |
|---|---|---|---|---|
| 1.85 | 1.85 | 100.0 | 71.5 | 1.40 |
| 1.85 | | 35.1 | | |
| | 1.85 | 56.1 | | |

Table 52 PLASVI (1DC)

| i)Formula III concentration (ppm) | ii)Mefenoxam concentration (ppm) | % Disease Control (observed) | % Disease Control (predicted) | Synergy Factor |
|---|---|---|---|---|
| 1.90 | 1.85 | 100.0 | 95.63 | 1.05 |
| 1.85 | | 17.5 | | |
| | 1.90 | 94.7 | | |

Table 53 PHYTIN (1DP)

| i)Formula III concentration (ppm) | ii)Mefenoxam concentration (ppm) | % Disease Control (observed) | % Disease Control (predicted) | Synergy Factor |
|---|---|---|---|---|
| 0.60 | 0.60 | 35.1 | 15.4 | 2.28 |
| 0.60 | | 3.5 | | |
| | 0.60 | 12.3 | | |

Table 54 PLASVI (1DP)

| i)Formula III concentration (ppm) | ii)Mefenoxam concentration (ppm) | % Disease Control (observed) | % Disease Control (predicted) | Synergy Factor |
|---|---|---|---|---|
| 0.62 | 0.62 | 96.5 | 86.19 | 1.12 |
| 0.21 | 0.21 | 75.1 | 42.64 | 1.76 |
| 0.62 | | 21.1 | | |
| 0.21 | | 14.0 | | |
| | 0.62 | 82.5 | | |
| | 0.21 | 33.3 | | |

Table 55 PHYTIN (1DP)

| i)Formula III concentration (ppm) | ii)Metalaxyl concentration (ppm) | % Disease Control (observed) | % Disease Control (predicted) | Synergy Factor |
|---|---|---|---|---|
| 5.56 | 5.56 | 31.6 | 22.80 | 1.39 |
| 5.56 | | 22.8 | | |
| | 5.56 | 0.0 | | |

Table 56 PLASVI (3DP)

| i)Formula III concentration (ppm) | ii)Metalaxyl concentration (ppm) | % Disease Control (observed) | % Disease Control (predicted) | Synergy Factor |
|---|---|---|---|---|
| 0.90 | 5.60 | 50.9 | 33.60 | 1.51 |
| 0.30 | 1.90 | 29.8 | 15.80 | 1.89 |
| 0.90 | | 15.8 | | |
| 0.30 | | 0.0 | | |
| | 5.60 | 21.1 | | |
| | 1.90 | 15.8 | | |

Table 57 PHYTIN (1DP)

| i)Formula III concentration (ppm) | ii)Oxadixyl concentration (ppm) | % Disease Control (observed) | % Disease Control (predicted) | Synergy Factor |
|---|---|---|---|---|
| 1.85 | 1.85 | 92.3 | 83.86 | 1.10 |
| 0.62 | 0.62 | 24.6 | 14.00 | 1.75 |
| 1.90 | | 78.6 | | |
| 0.62 | | 14.0 | | |
| | 1.90 | 24.6 | | |
| | 0.62 | 0.0 | | |

Table 58 PLASVI (1DP)

| i)Formula III concentration (ppm) | ii)Oxadixyl concentration (ppm) | % Disease Control (observed) | % Disease Control (predicted) | Synergy Factor |
|---|---|---|---|---|
| 0.21 | 0.21 | 35.1 | 20.75 | 1.69 |
| 0.20 | | 1.8 | | |
| 0.00 | 0.20 | 19.3 | | |

Table 59 PHYTIN (1 DC)

| i)Formula III concentration (ppm) | ii)Benalaxyl concentration (ppm) | % Disease Control (observed) | % Disease Control (predicted) | Synergy Factor |
|---|---|---|---|---|
| 2.80 | 16.70 | 96.1 | 75.35 | 2.06 |
| 1.90 | 1.90 | 57.9 | 28.04 | 2.06 |
| 2.80 | | 71.9 | | |
| 1.90 | | 21.1 | | |
| | 16.70 | 12.3 | | |
| | 1.90 | 8.8 | | |

Table 60 (PI ASVI (1DC)

| i)Formula III concentration (ppm) | ii)Benataxyl concentration (ppm) | % Disease Control (observed) | % Disease Control (predicted) | Synergy Factor |
|---|---|---|---|---|
| 0.60 | 0.60 | 54.4 | 28.60 | 1.90 |
| 0.60 | | 5.3 | | |
| | 0.60 | 24.6 | | |

Table 61 PHYTIN (1 DC)

| i)Formula III concentration (ppm) | ii)Ofurace concentration (ppm) | % Disease Control (observed) | % Disease Control (predicted) | Synergy Factor |
|---|---|---|---|---|
| 0.90 | 5.60 | 84.2 | 61.10 | 1.38 |
| 1.90 | 1.90 | 61.4 | 30.80 | 1.99 |
| 0.90 | | 0.0 | | |
| 1.90 | | 21.1 | | |
| | 5.60 | 61.0 | | |
| | 1.90 | 12.3 | | |

Table 62 PHYTIN (3DP)

| i)Formula III concentration (ppm) | ii)Ofurace concentration (ppm) | % Disease Control (observed) | % Disease Control (predicted) | Synergy Factor |
|---|---|---|---|---|
| 0.60 | 0.60 | 91.2 | 73.70 | 1.24 |
| 0.30 | 1.90 | 66.7 | 40.40 | 1.65 |
| 0.60 | | 73.7 | | |
| 0.30 | | 40.4 | | |
| | 0.60 | 0.0 | | |
| | 1.90 | 0.0 | | |

Table 63 PLASVI (1 DC)

| i)Formula III concentration (ppm) | ii)Ofurace concentration (ppm) | % Disease Control (observed) | % Disease Control (predicted) | Synergy Factor |
|---|---|---|---|---|
| 0.60 | 0.60 | 66.7 | 25.28 | 2.64 |
| 0.60 | | 5.3 | | |
| | 0.60 | 21.1 | | |

**Example V Synergistic mixture of i) and ii) e)**

Commercially available alkylenebis(dithiocarbamates) in their technical forms, or as a wettable powder, were utilized to prepare the synergistic compositions for testing.

Biological Testing

The synergistic compositions prepared from technical materials were formulated in 10 vol% acetone plus 90 vol% Triton X100 water (deionized water 99.99 wt% + 0.01 wt% Triton X 100). Synergistic compositions prepared from wettable powders were dispersed in water prior to application. The synergistic compositions were tested for ability to control plant diseases at the whole plant level in 1 to 4-day protectant tests (1 DP, 2DP, 3DP or 4DP). Chemicals were sprayed on a turntable sprayer fitted with two opposing air atomization nozzles which delivered approximately 1000 Uha of spray volume. Plants were inoculated with spores of the fungus 1 to 4 days following application of the synergistic composition, then incubated in an environment conducive to disease development. Disease severity was evaluated 4 to 7 days later, depending on the speed of disease development.

The following experiments were performed in the laboratory to determine the synergistic fungicidal efficacy.

Late Blight of Tomatoes *(Phytophthora infestans-PHYTIN)*

Tomatoes *(cultivar Outdoor* Girl) were grown from seed in a soilless peat-based potting mixture (Metromix) until the seedlings were at the 1-2 leaf stage. These plants were then sprayed to run off with a suspension of the formulated composition at the rates, in ppm, shown in Tables 64, 65, 68, 70 and 72. After 1-4 days, depending on the test, the treated plants were inoculated with an aqueous spore suspension of *Phytophthora infestans* and incubated overnight in a dew chamber. The plants were then transferred to the greenhouse until disease developed on the untreated control plants.

Downy Mildew of Grapes *(Plasmopara viticola* - PLASVI)

Grape plants (variety "Carignane") were grown from seed in a greenhouse for six weeks in a soil-less potting mix until the seedlings were at a 2-3-leaf stage. These plants were sprayed to runoff with the formulated composition at the rates, in ppm, shown in Tables 66, 67, 69, 71 and 73. After 1-4 days, depending on the tests, the undersides of the leaves were inoculated with an aqueous spore suspension of *Plasmopara viticola* and the plants were kept in high humidity overnight. The plants were then transferred to a greenhouse until disease developed on untreated control plants.

The following Tables show the levels of control provided by alkylenebis(dithiocarbamates), by the compositions of the formula III and by the compound of formula IIIa and by their combinations with alkylenebis(dithiocarbamates). For each combination a synergy factor is calculated and provided.

A synergistic effect can be demonstrated with combinations of alkylenebis(dithiocarbamates) and the compositions of formula III or the compound of formula IIIa. Particular ratios of alkylenebis (dithiocarbamates) and the composition of formula III or the compound of formula IIIa are expected to exhibit even greater synergistic fungicidal activity than demonstrated by the data provided in Tables 64-73 as evidenced by even higher SF's. The determination of such further enhanced fungicidal activity is well within the ability of one skilled in this art utilizing the techniques taught herein.

Table 64 - PHYTIN (4DP)

| i) Formula III Concentration (ppm) | ii)Mancozeb Concentration (ppm) | % Disease Control (Observed) | % Disease Control (Predicted) | Synergy Factor |
|---|---|---|---|---|
| 2.80 | 16.70 | 100.0 | 60.8 | 1.65 |
| 0.60 | 0.60 | 43.9 | 20.3 | 2.17 |
| 2.80 | | 34.2 | | |
| 0.60 | | 15.8 | | |
| | 16.70 | 40.4 | | |
| | 0.60 | 5.3 | | |

Table 65 - PHYTIN (4DP)

| i) Formula IIIa Concentration (ppm) | ii)Mancozeb Concentratio n (ppm) | % Disease Control (Observed) | % Disease Control (Predicted) | Synergy Factor |
|---|---|---|---|---|
| 1.9 | 1.9 | 96.5 | 80.8 | 1.20 |
| 0.9 | 5.6 | 96.5 | 80.6 | 1.20 |
| 0.3 | 1.9 | 86.5 | 26.4 | 3.29 |
| 1.9 | | 78.9 | | |
| 0.9 | | 73.7 | | |
| 0.3 | | 19.3 | | |
| | 5.6 | 26.3 | | |
| | 1.9 | 8.8 | | |

Table 66 - PLASVI (1DP)

| i)Formula III Concentration (ppm) | ii)Mancozeb Concentration (ppm) | % Disease Control (Observed) | % Disease Control (Predicted) | Synergy Factor |
|---|---|---|---|---|
| 0.67 | 8.0 | 93.0 | 66.1 | 1.41 |
| 0.22 | 2.7 | 61.4 | 21.6 | 2.85 |
| 0.67 | | 49.1 | | |
| 0.20 | | 8.8 | | |
| | 8.0 | 33.3 | | |
| | 2.7 | 14 | | |

Table 67 - PLASVI (4DP)

| i)Formula IIIa Concentration (ppm) | ii)Mancozeb Concentratio n (ppm) | % Disease Control (Observed) | % Disease Control (Predicted) | Synergy Factor |
|---|---|---|---|---|
| 2.8 | 16.7 | 93.0 | 79.2 | 1.17 |
| 1.9 | 1.9 | 47.4 | 14.0 | 3.38 |
| 2.8 | | 76.3 | | |
| 1.9 | | 14.0 | | |
| | 16.7 | 12.3 | | |
| | 1.9 | 0 | | |

Table 68 - PHYTIN (3DP)

| i)Formula III Concentration (ppm) | ii)Maneb Concentration (ppm) | % Disease Control (Observed) | % Disease Control (Predicted) | Synergy Factor |
|---|---|---|---|---|
| 1.85 | 5.56 | 45.6 | 36.6 | 1.25 |
| 0.62 | 1.85 | 14.0 | 6.9 | 2.04 |
| 1.85 | | 26.3 | | |
| 0.62 | | 3.5 | | |
| | 5.56 | 14.0 | | |
| | 1.85 | 3.5 | | |

Table 69 - PLASVI (3DP)

| i)Formula III Concentration (ppm) | ii)Maneb Concentratio n (ppm) | % Disease Control (Observed) | % Disease Control (Predicted) | Synergy Factor |
|---|---|---|---|---|
| 5.56 | 16.70 | 54.4 | 48.4 | 1.12 |
| 5.56 | | 31.6 | | |
| | 16.70 | 24.6 | | |

Table 70 - PHYTIN (2DP)

| i) Formula III Concentration (ppm) | ii)Metiram Concentration (ppm) | % Disease Control (Observed) | % Disease Control (Predicted) | Synergy Factor |
|---|---|---|---|---|
| 5.56 | 5.56 | 14.0 | 12.3 | 1.14 |
| 5.56 | | 12.3 | | |
| | 5.56 | 0.0 | | |

Table 71 - PLASVI (2DP)

| i) Formula III Concentration (ppm) | ii)Metiram Concentratio n (ppm) | % Disease Control (Observed) | % Disease Control (Predicted) | Synergy Factor |
|---|---|---|---|---|
| 5.56 | 5.56 | 35.1 | 26.4 | 1.33 |
| 1.85 | 1.85 | 28.1 | 11.9 | 2.35 |
| 5.56 | | 19.3 | | |
| 1.85 | | 7.0 | | |
| | 5.56 | 8.8 | | |
| | 1.85 | 5.3 | | |

Table 72 - PHYTIN (2DP)

| i) Formula III Concentration (ppm) | ii)Propineb Concentration (ppm) | % Disease Control (Observed) | % Disease Control (Predicted) | Synergy Factor |
|---|---|---|---|---|
| 5.56 | 5.56 | 22.8 | 12.3 | 1.85 |
| 5.56 | | 12.3 | | |
| | 5.56 | 0.0 | | |

Table 73 - PLASVI (2DP)

| i) Formula III Concentration (ppm) | ii)Propineb Concentration (ppm) | % Disease Control (Observed) | % Disease Control (Predicted) | Synergy Factor |
|---|---|---|---|---|
| 5.56 | 5.56 | 26.3 | 19.3 | 1.36 |
| 5.56 | | 19.3 | | |
| | 5.56 | 0.0 | | |

**Example V Synergistic mixture of i) and ii) a) and iii)**

Compounds in their technical forms, or as their WP, WG or EC formulated products, and EC or WP formulations of composition of formula III and of compound of formula IIIa (according to the specific formulation type of the commercial product used in the synergistic composition) were utilized to prepare the synergistic compositions for testing.

Biological Testing

The synergistic compositions were tested for ability to control plant diseases at the whole plant level in 2 to 6-day protectant tests (2DP, 3DP, or 6DP). Chemicals were sprayed on a turntable sprayer fitted with two opposing air atomization nozzles which delivered approximately 1000 Uha of spray volume. Plants were inoculated with spores of

the fungi 2 to 6 days following application of the synergistic composition, then incubated in an environment conducive to disease development. Disease severity was evaluated 4 to 7 days later, depending on the speed of disease development.

The following experiments were performed in the laboratory to determine the synergistic fungicidal efficacy.

Late Blight of Tomatoes *(Phytophthora infestans-PHYTIN)*

Tomatoes (*cultivar* Outdoor Girl) were grown from seed in a soilless peat-based potting mixture (Metromix) until the seedlings were at the 1-2 leaf stage . These plants were then sprayed to run off with a suspension of the formulated composition at the rates, in ppm, shown in Tables 74, 76, 78, 80, 82, 84 and 86. Two, 3 or 6 days after application, depending on the tests, the treated plants were inoculated with an aqueous spore suspension of *Phytophthora infestans* and incubated overnight in a dew chamber. The plants were then transferred to the greenhouse until disease developed on the untreated control plants.

Downy Mildew of Grapes *(Plasmopara viticola* - PLASVI)

Grape plants (variety "Carignane") were grown from seed in a greenhouse for six weeks in a soil-less potting mix until the seedlings were at a 2-3-leaf stage. These plants were sprayed to runoff with the formulated composition at the rates, in ppm, shown in Tables 75, 77, 79, 81, 83, 85 and 87. Two, 3 or 6 days after application, depending on the tests, the undersides of the leaves were inoculated with an aqueous spore suspension of *Plasmopara viticola* and the plants were kept in high humidity overnight. The plants were then transferred to a greenhouse until disease developed on untreated control plants.

The following Tables show the levels of control provided. For each combination a synergy factor is calculated and provided.

A synergistic effects are demonstrated below. Particular ratios of the three components of a mixture are expected to exhibit even greater synergistic fungicidal activity than demonstrated by the data provided in Tables 74-87, as evidenced by even higher SF's. The determination of such further enhanced fungicidal activity is well within the ability of one skilled in this art utilizing the techniques taught herein.

Table 74 PHYTIN (3DP)

| i)Formula III (ppm) | ii)Zoxamide (ppm) | iii)Mancozeb (ppm) | % Disease Control (Observed) | % Disease Control (Predicted) | Synergy Factor |
|---|---|---|---|---|---|
| 1.1 | 1.1 | 8.9 | 77.2 | 25.6 | 3.01 |
| 1.1 | | | 12.3 | | |
| | 1.1 | | 10.5 | | |
| | | 8.9 | 5.3 | | |

Table 75 PLASVI (3DP)

| i)Formula III (ppm) | ii)Zoxamide (ppm) | iii)Mancozeb (ppm) | % Disease Control (Observed) | % Disease Control (Predicted) | Synergy Factor |
|---|---|---|---|---|---|
| 1.1 | 1.1 | 8.9 | 50.9 | 40.4 | 1.26 |
| 1.1 | | | 12.3 | | |
| | 1.1 | | 17.5 | | |
| | | 8.9 | 17.5 | | |

Table 76 PHYTIN (3DP)

| i)Formula III (ppm) | ii)Zoxamide (ppm) | iii)Cymoxanil (ppm) | % Disease Control (Observed) | % Disease Control (Predicted) | Synergy Factor |
|---|---|---|---|---|---|
| 1.1 | 1.1 | 1.1 | 28.1 | 22.9 | 1.22 |
| 1.1 | | | 12.3 | | |
| | 1.1 | | 10.5 | | |
| | | 1.1 | 1.8 | | |

Table 77 PLASVI (3DP)

| i)Formula III (ppm) | ii)Zoxamide (ppm) | iii)Cymoxanil (ppm) | % Disease Control (Observed) | % Disease Control (Predicted) | Synergy Factor |
|---|---|---|---|---|---|
| 1.1 | 1.1 | 1.1 | 47.4 | 28.9 | 1.64 |
| 1.1 | | | 12.3 | | |
| | 1.1 | | 17.5 | | |
| | | 1.1 | 17.5 | | |

Table 78 PHYTIN (3DP)

| i)Formula III (ppm) | ii)Zoxamide (ppm) | iii)Dimetho-morph (ppm) | % Disease Control (Observed) | % Disease Control (Predicted) | Synergy Factor |
|---|---|---|---|---|---|
| 1.1 | 1.1 | 1.4 | 38.6 | 24.3 | 1.59 |
| 1.1 | | | 12.3 | | |
| | 1.1 | | 10.5 | | |
| | | 1.4 | 3.5 | | |

Table 79 PLASVI (3DP)

| i)Formula III (ppm) | ii)Zoxamide (ppm) | iii)Dimetho-morph (ppm) | % Disease Control (Observed) | % Disease Control (Predicted) | Synergy Factor |
|---|---|---|---|---|---|
| 1.1 | 1.1 | 1.4 | 49.1 | 44.2 | 1.11 |
| 0.4 | 0.4 | 0.5 | 24.6 | 8.5 | 2.88 |
| 1.1 | | | 12.3 | | |
| 0.4 | | | 1.8 | | |
| | 1.1 | | 17.5 | | |
| | 0.4 | | 3.5 | | |
| | | 1.4 | 22.8 | | |
| | | 0.5 | 3.5 | | |

Table 80 PHYTIN (6DP)

| i)Formula III (ppm) | ii)Zoxamide (ppm) | iii)Cu Oxy-chloride (ppm) | % Disease Control (Observed) | % Disease Control (Predicted) | Synergy Factor |
|---|---|---|---|---|---|
| 3.3 | 3.3 | 38.3 | 87.7 | 69.3 | .27 |
| 1.1 | 1.1 | 12.8 | 42.1 | 10.3 | 4.11 |
| 3.3 | | | 33.3 | | |
| 1.1 | | | 3.5 | | |
| | 3.3 | | 40.4 | | |
| | 1.1 | | 7 | | |
| | | 38.3 | 22.8 | | |
| | | 12.8 | 0 | | |

Table 81 PLASVI (6DP)

| i)Formula III (ppm) | ii)Zoxamide (ppm) | iii)Cu Oxy-chloride (ppm) | % Disease Control (Observed) | % Disease Control (Predicted) | Synergy Factor |
|---|---|---|---|---|---|
| 3.3 | 3.3 | 38.3 | 47.4 | 24.3 | 1.95 |
| 3.3 | | | 12.3 | | |
| | 3.3 | | 10.5 | | |
| | | 38.3 | 3.5 | | |

Table 82 PHYTIN (6DP)

| i)Formula III. (ppm) | ii)Zoxamide (ppm) | iii)Fosetyl-Al (ppm) | % Disease Control (Observed) | % Disease Control (Predicted) | Synergy Factor |
|---|---|---|---|---|---|
| 3.3 | 3.3 | 33.3 | 70.2 | 60.2 | 1.17 |
| 1.1 | 1.1 | 11.1 | 26.3 | 10.3 | 2.57 |
| 3.3 | | | 33.3 | | |
| 1.1 | | | 3.5 | | |
| | 3.3 | | 40.4 | | |
| | 1.1 | | 7 | | |
| | | 33.3 | 0 | | |
| | | 11.1 | 0 | | |

Table 83 PLASVI (6DP)

| i)Formula III (ppm) | ii)Zoxamide (ppm) | iii)Fosetyl-Al (ppm) | % Disease Control (Observed) | % Disease Control (Predicted) | Synergy Factor |
|---|---|---|---|---|---|
| 3.3 | 3.3 | 33.3 | 29.8 | 21.5 | 1.39 |
| 3.3 | | | 12.3 | | |

(continued)

| i)Formula III (ppm) | ii)Zoxamide (ppm) | iii)Fosetyl-Al (ppm) | % Disease Control (Observed) | % Disease Control (Predicted) | Synergy Factor |
|---|---|---|---|---|---|
| | 3.3 | | 10.5 | | |
| | | 33.3 | 0 | | |

Table 84 PHYTIN (2DP)

| i)Formula III (ppm) | ii)Zoxamide (ppm) | iii)Folpet (ppm) | % Disease Control (Observed) | % Disease Control (Predicted) | Synergy Factor |
|---|---|---|---|---|---|
| 1.1 | 1.1 | 12.8 | 47.4 | 31 | 1.51 |
| 0.4 | 0.4 | 4.3 | 26.3 | 9 | 3.03 |
| 1.1 | | | 15.8 | | |
| 0.4 | | | 5.3 | | |
| | 1.1 | | 14 | | |
| | 0.4 | | 1.8 | | |
| | | 12.8 | 5.3 | | |
| | | 4.3 | 1.8 | | |

Table 85 PLASVI (2DP)

| i)Formula III (ppm) | ii)Zoxamide (ppm) | iii)Folpet (ppm) | % Disease Control (Observed) | % Disease Control (Predicted) | Synergy Factor |
|---|---|---|---|---|---|
| 1.1 | 1.1 | 12.8 | 57.9 | 53 | 1.09 |
| 0.4 | 0.4 | 4.3 | 15.8 | 14 | 1.16 |
| 1.1 | | | 22.8 | | |
| 0.4 | | | 8.8 | | |
| | 1.1 | | 21.1 | | |
| | 0.4 | | 3.5 | | |
| | | 12.8 | 22.8 | | |
| | | 4.3 | 1.8 | | |

Table 86 PHYTIN (2DP)

| i)Formula III (ppm) | ii)Zoxamide (ppm) | iii)Mefen-oxam (ppm) | % Disease Control (Observed) | % Disease Control (Predicted) | Synergy Factor |
|---|---|---|---|---|---|
| 1.1 | 1.1 | 11.1 | 54.4 | 40 | 1.35 |
| 0.4 | 0.4 | 3.7 | 29.8 | 18 | 1.62 |
| 1.1 | | | 15.8 | | |
| 0.4 | | | 5.3 | | |

(continued)

| i)Formula III (ppm) | ii)Zoxamide (ppm) | iii)Mefen-oxam (ppm) | % Disease Control (Observed) | % Disease Control (Predicted) | Synergy Factor |
|---|---|---|---|---|---|
| | 1.1 | | 14 | | |
| | 0.4 | | 1.8 | | |
| | | 11,1 | 17.5 | | |
| | | 3.7 | 12.3 | | |

Table 87 PLASVI (2DP)

| i)Formula III (ppm) | ii)Zoxamide (ppm) | iii)Mefen-oxam (ppm) | % Disease Control (Observed) | % Disease Control (Predicted) | Synergy Factor |
|---|---|---|---|---|---|
| 3.3 | 3.3 | 33.3 | 100 | 88 | 1.14 |
| 1.1 | 1.1 | 11.1 | 71.9 | 63 | 1.15 |
| 3.3 | | | 42.1 | | |
| 1.1 | | | 22.8 | | |
| | 3.3 | | 36.8 | | |
| | 1.1 | | 21.1 | | |
| | | 33.3 | 66.7 | | |
| | | 11.1 | 38.6 | | |

## Claims

**1.** A synergistic composition comprising a first composition represented by formula III or formula IIIa

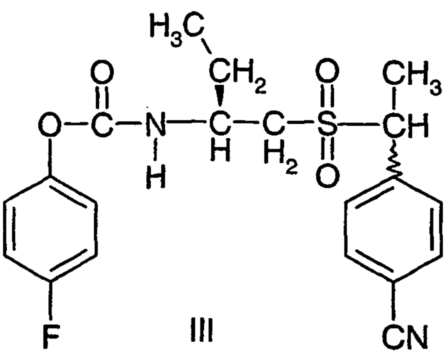
III

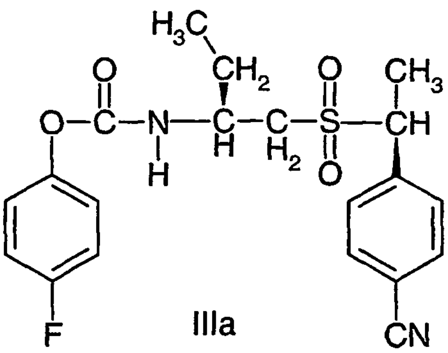
IIIa

and a second composition ii) selected from a), b), c), d), or e) below, wherein

a) is

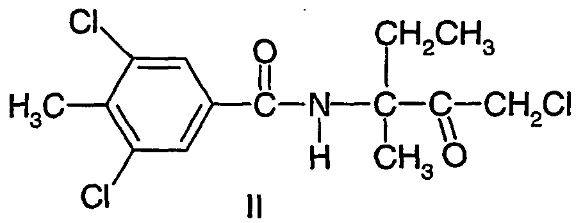

II

;

b) is chlorothalonil, copper hydroxide, copper oxychloride, folpet, captan, fluazinam, cyazofamid, ethaboxam, cymoxanil, dimethomorph, iprovalicarb, benthivalicarb, fosetyl-Al/phosphonic acid, propamocarb, an epimeric and diastereoisomeric form of dipeptide fungicide, or a N-sulfonylvaline amide, or a combination thereof;
c) is a mitochondrial Qo-site inhibitor;
d) is an acylalanine; and
e) is an alkylenebis(dithiocarbamate).

**2.** The composition of Claim 1 wherein c) is a strobilurin, dihydroimidazolone, or oxazolidinedione fungicide.

**3.** The composition of Claim 1 wherein c) is azoxystrobin, picoxystrobin, trifloxystrobin, pyraclostrobin, kresoxim-methyl, metominostrobin, fluoxastrobin, enestroburin, fenamidone and famoxadone, or combination thereof.

**4.** The composition of Claim 1 wherein d) is furalaxyl, metalaxyl, mefenoxam (also known as metalaxyl-M) benalaxyl, ofurace or oxadixyl.

**5.** The composition of Claim 1 wherein e) is mancopper, mancozeb, maneb, metiram, nabam, propineb, or zineb.

**6.** The composition of Claim 1 wherein the second composition ii) is a); and the synergistic composition additionally comprises mancozeb, cymoxanil, dimethomorph, copper oxychloride, fosetyl-Al, folpet, or mefenoxam.

**7.** A synergistic composition comprising a disease inhibiting and phytologically acceptable amount of a synergistic composition according to Claim 1 or Claim 6 and at least one additional pesticidal compound selected from the group consisting of fungicides, insecticides, nematocides, miticides, arthropodicides, and bactericides.

**8.** A non therapeutic process to control or prevent a fungal attack said process comprising applying to a locus a fungicidal amount of a synergistic composition according to Claim 1 or Claim 6.

**Patentansprüche**

**1.** Synergistische Zusammensetzung, umfassend eine erste Zusammensetzung, die durch Formel III oder Formel IIIa wiedergegeben wird

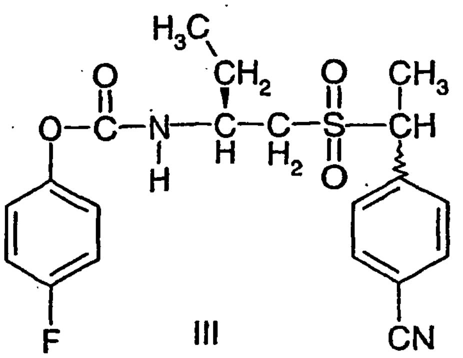

III

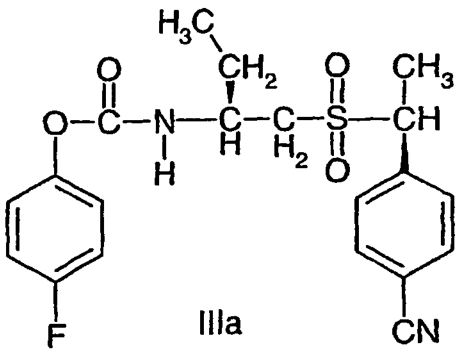

IIIa

und eine zweite Zusammensetzung ii), die ausgewählt ist aus nachstehenden a), b), c), d) oder e), worin

a)

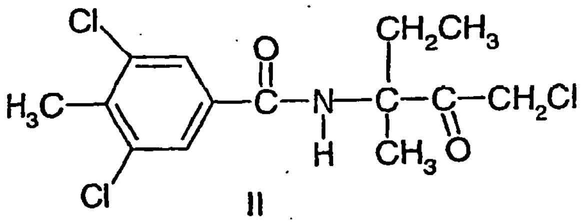

II

ist;

b) Chlorthalonil, Kupferhydroxid, Kupferoxychlorid, Folpet, Captan, Fluazinam, Cyazofamid, Ethaboxam, Cymoxanil, Dimethomorph, Iprovalicarb, Benthiavalicarb, Fosetyl-Al/Phosphonsäure, Propamocarb, eine epimere und diastereoisomere Form von Dipeptid-Fungizid oder oder ein N-Sulfonylvalinamid, oder eine Kombination davon ist;

c) ein Inhibitor der mitochondrialen Qo-Stelle ist;

d) Acylalanin ist ; und

e) Alkylenbis (dithiocarbamat) ist.

**2.** Zusammensetzung nach Anspruch 1, worin c) ein Strobilurin-, Dihydroimidazolon- oder Oxazolidindion-Fungizid ist.

**3.** Zusammensetzung nach Anspruch 1, worin c) ein Azoxystrobin, Picoxystrobin, Trifloxystrobin, Pyraclostrobin, Kresoxim-methyl, Metominostrobin, Fluoxastrobin, Enestroburin, Fenamidon und Famoxadon oder eine Kombination davon ist.

**4.** Zusammensetzung nach Anspruch 1, worin d) Furalaxyl, Metalaxyl, Mefenoxam (auch als Metalaxyl-M bekannt) Benalaxyl, Ofurace oder Oxadixyl ist.

**5.** Zusammensetzung nach Anspruch 1, worin e) Mancopper, Mancozeb, Maneb, Metiram, Nabam, Propineb oder Zineb ist.

**6.** Zusammensetzung nach Anspruch 1, worin die zweite Zusammensetzung ii) a) ist, und die synergistische Zusammensetzung zusätzlich Mancozeb, Cymoxanil, Dimethomorph, Kupferoxychlorid, Fosetyl-Al, Folpet oder Mefenoxam umfasst.

**7.** Synergistische Zusammensetzung, umfassend eine erkrankungshemmende und phytologisch annehmbare Menge einer synergistischen Zusammensetzung gemäß Anspruch 1 oder Anspruch 6 und wenigstens eine zusätzliche pestizide Verbindung, die ausgewählt ist aus der Gruppe bestehend aus Fungiziden, Insektiziden, Nematoziden, Mitiziden, Arthropoziden und Bakteriziden.

**8.** Nicht-therapeutisches Verfahren zur Kontrolle oder Vorbeugung eines Pilzbefalls, wobei das Verfahren die Anwendung einer fungiziden Menge einer synergistischen Zusammensetzung nach Anspruch 1 oder Anspruch 6 an einem Ort umfasst.

## Revendications

**1.** Composition synergique, comprenant un premier composé représenté par la formule III ou la formule IIIa :

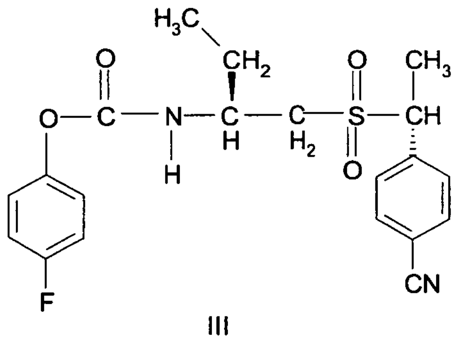

III

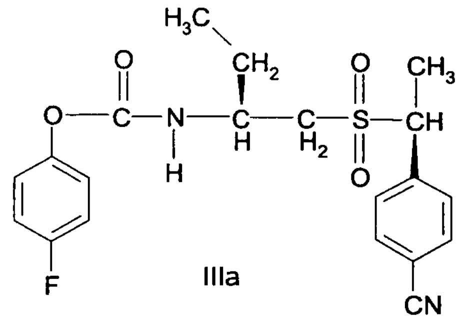

IIIa

et un deuxième composé (ii) choisi parmi les composés (a), (b), (c), (d) et (e) indiqués ci-dessous :

- le composé (a) est le composé de formule

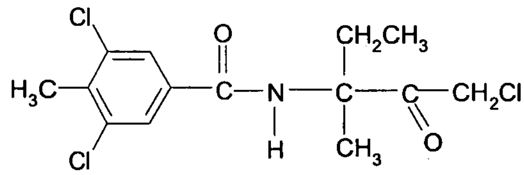

II

;

- le composé (b) est de l'un des chlorothalonil, hydroxyde de cuivre, oxychlorure de cuivre, folpet, captan, fluazinam, cyazofamid, éthaboxam, cymoxanil, diméthoporph, iprovalicarb, benthivalicarb, fosétyl-aluminium/ acide phosphonique et propamocarb, un épimère ou un diastéréo-isomère d'un dipeptide fongicide, ou un N-sulfonyl-valinamide, ou encore une combinaison de ces composés ;
- le composé (c) est un inhibiteur des sites Qo des mitochondries ;
- le composé (d) est une acyl-alanine ;
- et le composé (e) est un alkylène-bis(dithiocarbamate).

2. Composition conforme à la revendication 1, dans laquelle le composé (c) est un fongicide de type strobilurine, dihydro-imidazolone ou oxazolidinedione.

3. Composition conforme à la revendication 1, dans laquelle le composé (c) est de l'un des suivants : azoxystrobine, picoxystrobine, trifloxystrobine, pyraclostrobine, kresoxim-méthyle, métominostrobine, fluoxastrobine, énestroburine, fénamidone ou famoxadone, ou une combinaison de ces composés.

4. Composition conforme à la revendication 1, dans laquelle le composé (d) est de l'un des suivants : furalaxyl, métalaxyl, méfénoxam (connu aussi sous le nom de métalaxyl-M), bénalaxyl, ofurace ou oxadixyl.

5. Composition conforme à la revendication 1, dans laquelle le composé (e) est de l'un des suivants : mancopper, mancozeb, maneb, métiram, nabam, propineb ou zineb.

6. Composition conforme à la revendication 1, dans laquelle le deuxième composé (ii) est du composé (a), et la composition synergique comprend en outre du mancozeb, du cymoxanil, du diméthomorph, de l'oxychlorure de cuivre, du fosétyl-aluminium, du folpet ou du méfénoxam.

7. Composition synergique comprenant, en une quantité suffisante pour inhiber des maladies et phytologiquement admissible, une composition synergique conforme à la revendication 1 ou 6, et au moins un composé pesticide supplémentaire choisi parmi les fongicides, insecticides, nématocides, miticides, arthropodicides et bactéricides.

**8.** Procédé non-thérapeutique de lutte contre une attaque fongique ou de prévention d'une attaque fongique, lequel procédé comporte le fait d'appliquer, en un site attaqué ou susceptible de l'être, et en une quantité à effet fongicide, une composition synergique conforme à la revendication 1 ou 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0240431 A
- WO 0042011 A
- WO 0030440 A
- US 6448228 B1
- WO 0221918 A
- WO 0240431 A2


### Non-patent literature cited in the description


- Calculation of the synergistic and antagonistic responses of herbicide combinations. journal Weeds, 1967, vol. 15, 20-22